# EUROPEAN PATENT SPECIFICATION

(11) **EP 0 900 619 B1**
(45) Date of publication and mention of the grant of the patent: **02.07.2003**
(21) Application number: 98307041.8
(22) Date of filing: 02.09.1998
(51) Int. Cl.: B23K 1/008

(54) **Method of brazing aluminium with flux and a furnace therefor**
Verfahren zum Löten von Aluminium-Werkstücken und Ofen dafür
Méthode de brasage d'éléments d'aluminium et four utilisé

(30) Priority: 02.09.1997 JP 27635497
(43) Date of publication of application: 10.03.1999
(73) Proprietor: KANTO YAKIN KOGYO KABUSHIKI KAISHA, Hiratsuka-shi, Kanagawa-ken (JP)
(72) Inventor: Susumu, Takahashi, Hodogaya-ku, Yokohama (JP)
(74) Representative: Lord, Hilton David

(56) References cited:
- EP-A- 0 815 998
- US-A- 4 874 918
- US-A- 5 611 476

## Description

The present invention relates to a furnace which can advantageously be employed to braze aluminium parts, as well as to a method of brazing aluminium or aluminium alloy parts, and more particularly the method of brazing them with a flux.

When iron, copper, or their alloys are put into a furnace using a reductive gas, using such gases as hydrogen and carbon monoxide as the atmosphere, and are subjected to a high temperature, they are deoxidised. Therefore, the brazing of such metals within such an atmosphere furnace needs no flux.

On the other hand, aluminium and its alloys cannot be brazed by heating them within the atmosphere furnace of the kind mentioned above, as they do not deoxidise even under an extremely low partial pressure of oxygen. Accordingly, brazing of these materials has been carried out by the use of a flux, without use of an atmosphere as mentioned above.

Accordingly, conventional brazing may be summarised in that the brazing of iron, copper, or alloys thereof, is carried out by heating within a furnace and employing a reductive atmosphere, but without needing a flux, while the brazing of aluminium and its alloys employs a flux, but needs no reductive atmosphere.

However, it has recently become useful and/or essential when brazing aluminium and its alloys with a flux to additionally employ an inert atmosphere. This allows aluminium parts to be brazed with a minimum amount of flux and, effectively, without causing environmental pollution.

Those fluxes which are commonly used for brazing aluminium parts have a melting point of 500 - 550°C and are made from fluorine compounds such as aluminium fluoride, potassium tetrafluoroaluminate, sodium fluoride, or an alkali metal chloride containing one or more fluorine compounds. They are soluble only slightly in water and, so, need a large volume of water to wash them off. In order to reduce the volume of water for washing off the fluxes, or to eliminate a washing step in view of potential environmental pollution, fluxes need to be used in the minimum quantities possible.

The reduction in the use of fluxes can limit environmental pollution, especially water pollution, and it can be economic. It can yield fine aluminium articles with only a small amount of flux residue. It can also prevent a furnace from being significantly eroded by fluxes.

However, fluxes which have been applied thinly over aluminium parts in order to minimise their use are readily oxidised at high temperatures. When oxidised, fluxes of the kind mentioned above will have a melting point of more than 1,000°C. Since the melting point of Al-Si system solders which are commonly used in aluminium brazing is about 500 - 630°C, and since the aluminium or aluminium alloy brazing is conducted at about 580 - 660°C, oxidised fluxes having melting points as high as 1,000°C are unserviceable. They will induce secondary oxidation of aluminium or aluminium alloy parts to which they have been applied.

Consequently, it becomes essential to heat aluminium or aluminium alloy parts under an inert atmosphere in the brazing process, as described above, in order to prevent the flux from oxidising. In practice, a hermetic metallic muffle filled with nitrogen gas of a high purity is installed in a furnace, and the aluminium or aluminium alloy parts are brazed, with flux, under an inert atmosphere within the metallic muffle.

A metallic muffle of this type protects the muffle atmosphere from outer disturbance or contamination. Electric elements which are installed in the space between the muffle and inner furnace walls are protected by the muffle from fluxes scattered therein. In this way the muffle prevents the electric components of the heating elements from being affected by the fluxes. Although metallic muffles of this nature can be used, it is not easy to replace them when they are damaged, for example, by fluxes. Moreover, as metallic muffles employed today are as long as 10 m, it is laborious to install or replace them.

Document US-A-4 874 918 discloses a vacuum brazing furnace or hermetically sealed furnace in which aluminium or alloys thereof can be brazed directly, substantially without atmospheric contamination. In this prior art, however, the furnace heaters are arranged outside the furnace chamber.

Thus, in a first aspect, the present invention provides a hermetically sealed furnace in which aluminium or alloys thereof can be brazed directly, substantially without atmospheric contamination in accordance with claim 1.

It will be appreciated that, in such a furnace, there is no separate muffle. The article is brazed directly in the furnace, and is protected from oxidising gases by the hermetically sealed furnace. It will also be appreciated that there may be some atmospheric contamination, but that conventional steps can be taken to minimise such contamination.

The furnace walls may be, themselves, hermetically sealed, although the materials from which most furnace walls are constructed do not generally lend themselves to such a construction. Instead, it is generally preferred to provide a shell around the walls of the furnace, specifically to hermetically seal the furnace, preferably with insulating material disposed between the shell and the furnace walls.

In a further aspect the present invention provides a continuous atmosphere furnace for brazing aluminium or aluminium alloy parts using a flux, wherein the furnace contains a brazing space defined by inner walls and at least one outer shell surrounding the brazing space, the outer shell forming a hermetic shell against the air.

In specific embodiment, the invention relates to a continuous atmosphere furnace for brazing aluminium or aluminium alloy parts with the use of a flux, which comprises an elongated and rectangular cross-sectional brazing space extending in a longitudinal direction of the furnace and made of carbonaceous refractory plates, those of which laid at the bottom, forming a hearth which is cut transversely to the longitudinal direction of the furnace and divided into a desired number of pieces, metallic outer shells surrounding the brazing space with insulation therebetween, the shells being made hermetic against the air, and heating and other elements, parts of which are hermetically fitted hued to the shells and parts of which extended into the brazing space are sealed by anti-corrosive materials.

The present invention also provides a method for continuously brazing aluminium or aluminium alloy parts with the use of a flux and under a furnace atmosphere, which comprises brazing the parts under the furnace atmosphere in an elongated space formed by carbonaceous refractory furnace inner walls, and protecting the atmosphere not to be in contact with the air by surrounding the furnace inner walls with metallic furnace outer walls which are made hermetic against the air and by hermetically installing to the furnace outer walls those heating and other elements, parts of which extend into the elongated space.

The invention further provides a method in which the parts of the elements which are extended into the elongated space are covered by materials which are anti-corrosive against the flux.

The invention further provides a method in which the bottom walls of the carbonaceous refractory furnace inner walls are made as a hearth, and dividing the hearth transversely to a longitudinal direction of the furnace into a desired number of pieces.

It is an advantage of the present invention that it is possible to continuously braze aluminium or aluminium alloy parts using fluxes under an inert atmosphere, such as nitrogen, within a furnace which does not use a metallic muffle, thereby avoiding the necessity of replacing the muffle, and also to provide such a furnace.

In the present invention, air is excluded from an inert atmosphere contained within a furnace. The oxidation of aluminium or aluminium alloy parts, assembled and applied with solders and fluxes for brazing, is thus prevented, particularly the oxidation of the fluxes. Oxidation is prevented not by the aforementioned kind of conventional hermetic metallic muffle installed within the furnace, but suitably by metallic outer walls which are outside the furnace inner walls, separated through an insulation layer or space, to form hermetic shells. In this way the inert atmosphere which is introduced directly into a space within the furnace inner walls, and which fills up the space, is protected from the air.

In the present invention, apparatus, devices and tools may penetrate through the metallic outer shell walls and furnace inner walls and be installed so as to open into or face into the furnace inner walls. Suitable apparatus include atmospheric gas supply tubes, thermometers, heating elements and atmosphere observation meters, all of which are hermetically attached to the furnace, such that the furnace remains hermetically sealed against the air.

Since inorganic bases contained in the aforementioned kind of fluxes severely erode oxide refractory materials, it is preferable to build the furnace inner walls from carbonaceous materials such as carbonaceous refractory materials which are able to withstand such erosion. We prefer that the inner walls at the bottom of the furnace, namely the hearth, is divided into several pieces transverse to the longitudinal direction of the hearth, so that the divided hearth may be pushed or drawn out longitudinally for inspection, and to replace pieces of the hearth if this is required.

An embodiment of the present invention will now be described, by way of example only, with reference to the accompanying drawing and Example, wherein:

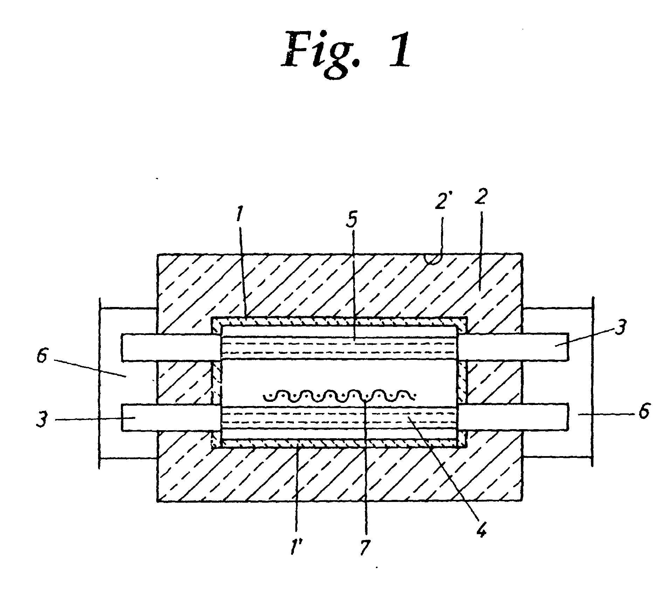

Figure 1 is an explanatory sectional view of an essential part of a continuous atmosphere furnace which can advantageously be employed to practice a method of the present invention.

In Figure 1, furnace inner walls 1 which are sheets made by sintering pure graphite, one of the carbonaceous materials, form a tunnel-like space which extends along a longitudinal direction of the furnace and is rectangular in its cross-section, and in which a brazing operation is carried out. The furnace inner walls indicated by 1' are bottom walls which form a hearth of the furnace and are divided transversely to the longitudinal direction of the furnace into a desired number of pieces.

Steel sheets 2' which form a furnace shell located outside of the furnace inner walls 1 with insulation 2 therebetween, are made such that they form a hermetic seal against the air. Numerals 3 indicate a pair of electric resistant heaters having heating elements 4 located within the furnace inner walls 1 and also having outer ends which penetrate through the furnace shell sheets 2' and are hermetically sealed against the air by hermetic boxes 6. The heating elements 4 of the heaters 3 are covered by ceramic sleeves 5 so that their insulation shall not be damaged by fluxes scattering within the furnace inner walls. Ceramics may be replaced by metallic materials or other suitable materials which are not corroded by fluxes.

A conveyor 7 circulates through the rectangular space within the furnace inner walls 1 in the longitudinal direction of the furnace for carrying aluminium parts and is preferably made of a carbonaceous material or materials.

Apparatus which penetrates through the shell sheets 2' and furnace inner walls 1 and which is installed so as to open or locate within the furnace inner walls, such as atmosphere supplying tubes, thermometers, atmosphere observation meters and the like, which are not shown in the drawing, are also made so as to be hermetically sealed against the air, similar to the heaters 3.

### Example 1

Directly into a space (650mm in width, 6,000mm in length, and 180mm in effective height) made by the furnace inner walls 1 of the above-described continuous atmosphere furnace, a nitrogen gas of a high purity was sent at 33m³/hour from an atmosphere supplying tube open at its central upper portion (not shown). At the same time the nitrogen gas was charged into the hermetically sealed boxes 6. The space made by the furnace inner walls 1, that is, a heating chamber, was kept at 600°C by the heaters 3.

Into the heating chamber, assemblies of aluminium parts were sent by the conveyor 7 at a rate of 60 assemblies/hour. Each assemblies was adhered with 60g of a flux made from alkali metal chloride containing fluorine compounds and having a melting point of 547°C and was coated by an Al-Si system brazing sheet of a melting point of 590°C.

Although the nitrogen gas supplied into the heating chamber was gradually discharged to the outside from inlet and outlet openings, air never entered into the chamber, and the furnace atmosphere was always kept at an oxygen level of 25 - 55 ppm. Brazing was conducted successfully for a long period of time.

In the present invention, brazing of aluminium or aluminium alloy parts with a flux is performed under a desired atmosphere without employing a corrodible metallic muffle, whereby the brazing becomes economic in its operation and maintenance. It is a characteristic feature of the present invention that the hermetic means which shut the furnace from the air are located remotely from its heating chamber, the means shall not be subjected to a high temperature and will not be eroded by fluxes. The hermetic means are furnace shells and sealing boxes attached to the shells, and materials and structures by which they are made can be selected rather freely, and their maintenance will be comparatively easy.

## Claims

1. A hermetically sealed furnace in which aluminium or alloys thereof can be brazed directly, substantially without atmospheric contamination, **characterised in that** heating elements are present at the brazing site and that the furnace is hermetically sealed by at least one outer shell.

2. A furnace according to claim 1, which is a continuous furnace.

3. A furnace according to claim 1 or 2, wherein the at least one outer shell is metallic.

4. A furnace according to any preceding claim, further comprising a brazing space within the furnace, defined by inner walls.

5. A furnace according to claim 4, wherein the brazing space has a bottom surface which is divided into pieces transverse to the longitudinal direction of the furnace.

6. A furnace according to claim 4 or 5, wherein the inner walls defining the brazing space are made of a carbonaceous material.

7. A furnace according to any preceding claim, further comprising apparatus which penetrates through the outer shell wall and extends into the brazing space and which is hermetically fitted to the outer shell by anti-corrosive materials.

8. A furnace according to any preceding claim, wherein there is an insulating layer between the brazing space and the at least one outer shell.

9. A method for continuously brazing aluminium or aluminium alloys parts using a furnace, wherein the furnace is as defined in any preceding claim.

## Patentansprüche

1. Hermetisch abgedichteter Ofen, in dem Aluminium oder Legierungen davon direkt, im wesentlichen ohne eine atmosphärische Verunreinigung, gelötet werden können, **dadurch gekennzeichnet, dass** Erwärmungselemente an der Lötstelle vorhanden sind und, dass der Ofen durch wenigstens eine äußere Hülle hermetisch abgedichtet ist.

2. Ofen nach Anspruch 1, der ein kontinuierlicher Ofen ist.

3. Ofen nach Anspruch 1 oder 2, wobei die wenigstens eine äußere Hülle metallisch ist.

4. Ofen nach irgendeinem vorangehenden Anspruch, ferner umfassend einen Lötraum innerhalb des Ofens, definiert durch innere Wände.

5. Ofen nach Anspruch 4, wobei der Lötraum eine Bodenfläche aufweist, die in Stücke transversal zu der longitudinalen Richtung des Ofens aufgeteilt ist.

6. Ofen nach Anspruch 4 oder 5, wobei die inneren Wände, die den Lötraum definieren, aus einem kohlenstoffhaltigen Material gebildet sind.

7. Ofen nach irgendeinem vorangehenden Anspruch, ferner umfassend eine Vorrichtung, die durch die Außenhüllenwand dringt und sich in den Lötraum hinein erstreckt und die hermetisch an der äußeren Hülle durch anti-korrosionsfähige Materialien angebracht ist.

8. Ofen nach irgendeinem vorangehenden Anspruch, wobei eine Isolationsschicht zwischen dem Lötraum und der wenigstens einen äußeren Hülle vorhanden ist.

9. Verfahren zum kontinuierlichen Löten von Aluminium- oder Aluminiumlegierungsteilen unter Verwendung eines Ofens, wobei der Ofen wie in irgendeinem vorangehenden Anspruch definiert ist.

## Revendications

1. Four fermé hermétiquement dans lequel de l'aluminium ou des alliages de celui-ci peuvent être brasés directement, substantiellement sans contamination atmosphérique, **caractérisé en ce que** des éléments de chauffage sont présents au niveau du site de brasage et **en ce que** le four est fermé hermétiquement par au moins une caisse extérieure.

2. Four suivant la revendication 1, qui est un four continu.

3. Four suivant la revendication 1 ou 2, dans lequel la au moins une caisse extérieure est métallique.

4. Four suivant l'une quelconque des revendications précédentes, comprenant en outre un espace de brasage à l'intérieur du four, défini par des parois intérieures.

5. Four suivant la revendication 4, dans lequel l'espace de brasage possède une surface de fond qui est divisée en parties transversales à la direction longitudinale du four.

6. Four suivant la revendication 4 ou 5, dans lequel les parois intérieures définissant l'espace de brasage sont composées d'un matériau carboné.

7. Four suivant l'une quelconque des revendications précédentes, comprenant en outre un appareil qui passe à travers la paroi de la caisse extérieure et s'étend dans l'espace de brasage et qui est fixé hermétiquement à la caisse extérieure par des matériaux anti-corrosion.

8. Four suivant l'une quelconque des revendications précédentes, dans lequel il se trouve une couche isolante entre l'espace de brasage et la au moins une caisse extérieure.

9. Procédé pour le brasage en continu de pièces d'aluminium ou d'alliages d'aluminium en utilisant un four, dans lequel le four est tel que défini dans l'une quelconque des revendications précédentes.
